# EUROPÄISCHE PATENTSCHRIFT

(11) **EP 1 142 939 B1**
(45) Veröffentlichungstag und Bekanntmachung des Hinweises auf die Patenterteilung: **10.11.2004**
(21) Anmeldenummer: 01106656.0
(22) Anmeldetag: 16.03.2001
(51) Int. Cl.: C08J 9/00, C08K 5/5333, C07F 9/40, C08L 75/04

(54) **Halogenfreier, wassergetriebener flammwidriger Polyurethanhartschaum und ein Verfahren zu seiner Herstellung**
Halogen-free, waterblown fire resistant hard polyurethane foam, and its production process
Mousse rigide de polyuréthane ignifugée, non halogénée et expansée à l'aide d'eau, et son procédé de préparation

(30) Priorität: 27.03.2000 DE 10014596
(43) Veröffentlichungstag der Anmeldung: 10.10.2001
(73) Patentinhaber: Clariant GmbH, 65929 Frankfurt am Main (DE)
(72) Erfinder: Witte, Anne, Dr., 48268 Greven (DE); Krieger, Wilfried, 50321 Brühl (DE)
(74) Vertreter: Mikulecky, Klaus, Dr.

(56) Entgegenhaltungen:
- EP-A- 0 632 046
- DATABASE CHEMABS [Online] CHEMICAL ABSTRACTS SERVICE, COLUMBUS, OHIO, US; YANCHUK, N. I.: "Formation reaction of phosphorus-containing polyurethanes" retrieved from STN Database accession no. 97:24306 CA XP002172650 & VOPR. KHIM. KHIM. TEKHNOL. (1981), 63, 66-9 ,
- DATABASE WPI Section Ch, Week 197715 Derwent Publications Ltd., London, GB; Class E11, AN 1977-26073Y XP002172651 & JP 52 027721 A (NISSAN CHEM IND LTD), 2. März 1977 (1977-03-02) & JP 52 027721 A (NISSAN CHEM IND LTD) 2. März 1977 (1977-03-02)

## Beschreibung

Die Erfindung betrifft einen halogenfreien, wassergetriebenen flammwidrigen Polyurethanhartschaum und ein Verfahren zu seiner Herstellung sowie die Verwendung von oxalkylierten Alkylphosphonsäuren zur Herstellung von solchen Polyurethanhartschäumen.

Polyurethanhartschaumstoffe werden in vielen Bereichen, wie in der Kühlmöbelindustrie, als Dämmstoffe im Bau, etwa für Heizungs- und Verbundelemente, als Verpackungen und allgemein als technische Dämmung eingesetzt. Zum Erreichen der in diesen Branchen gewünschten und teilweise vom Gesetzgeber geforderten hohen Flammschutzanforderungen müssen Polyurethanhartschaumstoffe in der Regel mit Flammschutzmitteln ausgerüstet werden. Hierzu sind eine Vielzahl unterschiedlicher Flammschutzmittel bekannt und auch kommerziell erhältlich. Der Verwendung solcher Flammschutzmittel stehen allerdings vielfach erhebliche anwendungstechnische Probleme und toxikologische Bedenken entgegen.

So treten bei Verwendung fester Flammschutzmittel wie beispielsweise Melamin, Ammoniumpolyphosphat und Ammoniumsulfat dosiertechnische Probleme auf, die häufig aufwendige Umbauten und Anpassungen der Verschäumanlagen notwendig machen.

Aus ökotoxikologischen Gründen sowie aufgrund verbesserter Brandnebenerscheinungen bezüglich Rauchgasdichte und Rauchgastoxizität werden halogenfreie Flammschutzmittelsysteme grundsätzlich bevorzugt.

Für Polyurethanweichschaumsysteme können hydroxylgruppentragende oligomere Phosphorsäureester (DE-OS 43 42 972) als Flammschutzmittel eingesetzt werden. Solche Verbindungen, deren Eigenschaften und Wirkungen lassen sich bekannterweise nicht auf Polyurethanhartschaumsysteme übertragen.

Zwar können Polyurethanweich- und hartschaumsysteme grundsätzlich in etwa die gleiche Raumdichte und Zusammensetzung aufweisen, jedoch sind die Polyurethanweichschäume nur gering vernetzt und weisen bei Druckbelastung nur einen geringen Verformungswiderstand auf.

Im Gegensatz dazu besteht die Struktur der Polyurethanhartschäume aus hoch vernetzten Einheiten und der Polyurethanhartschaum zeigt bei Druckbelastung einen sehr hohen Verformungswiderstand. Der typische Polyurethanhartschaum ist geschlossenzellig und weist nur eine niedrige Wärmeleitzahl auf.

Primär wird bei der Herstellung von Polyurethanen, die über die Reaktion von Polyolen mit Isocyanaten abläuft, über die Art und Chemie des Polyols (Funktionalität) die spätere Schaumstrukur und seine Eigenschaften beeinflusst.

Es ist Aufgabe der vorliegenden Erfindung, einen halogenfreien, wassergetriebenen flammwidrigen Polyurethanhartschaum zur Verfügung zu stellen, der die vorgenannten Nachteile vermeidet und den notwendigen und vorgegebenen Anforderungen an Flammwidrigkeit, Herstellmöglichkeit, niedrige Rauchgasdichte und geringe Rauchgastoxizität genügt.

Die vorliegende Aufgabe wird gelöst durch einen Polyurethanschaum der eingangs genannten Art, dadurch gekennzeichnet, daß er als Flammschutzmittel oxalkylierte Alkylphosphonsäuren enthält.

Bevorzugt entsprechen die oxalkylierten Alkylphosphonsäuren der allgemeinen Formel I, 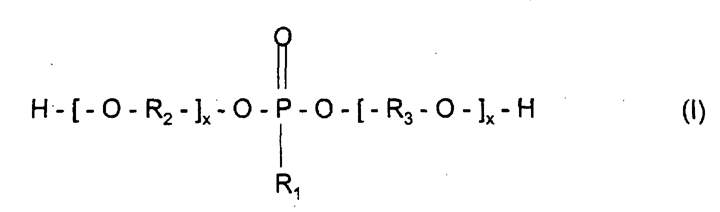 in der
R₁ einen Methyl-, Ethyl- oder Propylrest
R₂, R₃ gleich oder verschieden sind und für einen Methylen-, Ethylen- oder Propylenrest stehen und x eine Zahl von 1,2 bis 1,9 bedeutet.

Bevorzugt bedeutet R₁ einen Methylrest und x eine Zahl von 1,5 bis 1,7.
Der Wert für x gibt die mittlere Kettenlänge an.

Bevorzugt enthält der halogenfreie, wassergetriebene flammwidrige Polyurethanhartschaum das Flammschutzmittel in einer Menge von 0,1 bis 30 Gew.-%, bezogen auf den ausgehärteten Polyurethanhartschaum.

Besonders bevorzugt enthält der halogenfreie, wassergetriebene flammwidrige Polyurethanhartschaum das Flammschutzmittel in einer Menge von 5 bis 20 Gew.-%, bezogen auf den ausgehärteten Polyurethanhartschaum.

Bevorzugt weist der halogenfreie, wassergetriebene flammwidrige Polyurethanhartschaum ein Raumgewicht von 25 bis 80 kg/m³ auf.

Besonders bevorzugt weist er ein Raumgewicht von 30 bis 50 kg/m³ auf.

Die vorliegende Aufgabe wird auch gelöst durch ein Verfahren zur Herstellung von halogenfreien, wassergetriebenen flammwidrigen Polyurethanhartschäumen, dadurch gekennzeichnet, daß als Flammschutzmittel oxalkylierte Alkylphosphonsäuren eingesetzt werden.

Bevorzugt entsprechen die oxalkylierten Alkylphosphonsäuren der allgemeinen Formel I 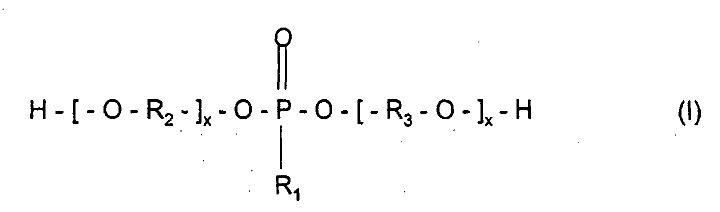 in der
R₁ einen Methyl-, Ethyl- oder Propylrest
R₂, R₃ gleich oder verschieden sind und für einen Methylen-, Ethylen- oder Propylenrest stehen und x eine Zahl von 1,2 bis 1,9 bedeutet.

Bevorzugt wird das Verfahren so ausgeführt, daß man organische Polyisocyanate mit Verbindungen mit mindestens 2 gegenüber Isocyanaten reaktionsfähigen Wasserstoffatomen mit Wasser als Treibmittel, Stabilisatoren, Aktivatoren und/oder weiteren üblichen Hilfs- und Zusatzstoffen in Gegenwart von oxalkylierten Alkylphosphonsäuren der allgemeinen Formel I umsetzt.

Bevprzugt handelt es sich bei den oxalkylierten Alkylphosphonsäuren der allgemeinen Formel I um bei Verarbeitungstemperatur flüssige Verbindungen. Unter Verarbeitungstemperatur wird dabei die Temperatur verstanden, bei der die Ausgangskomponenten vermischt werden.

Bevorzugt handelt es sich bei den oxalkylierten Alkylphosphonsäuren der allgemeinen Formel I um gegenüber Isocyanaten reaktive Verbindungen.

Bevorzugt werden die oxalkylierten Alkylphosphonsäuren der allgemeinen Formel I in einer Menge von 0,01 bis 50 Teilen, bezogen auf 100 Teile Polyolkomponente, eingesetzt.

Besonders bevorzugt werden die oxalkylierten Alkylphosphonsäuren der allgemeinen Formel I in einer Menge von 10 bis 35 Teilen, bezogen auf 100 Teile Polyolkomponente, eingesetzt.

Zu den Polyurethanhartschäumen:
Es handelt sich vorwiegend um Urethan- und/oder Isocyanurat- und/oder Allophanat- und/oder Uretdion- und/oder Harnstoff- und/oder Carbodiimidgruppen aufweisende Schaumstoffe. Die erfindungsgemäße Verwendung erfolgt vorzugsweise bei der Herstellung von Polyurethan- und Polyisocyanurat-Schaumstoffen.

Für die Herstellung der Schaumstoffe auf Isocyanatbasis werden eingesetzt:
Als Ausgangskomponenten: Aliphatische, cycloaliphatische, araliphatische, aromatische und heterocyclische Polyisocyanate (z.B. W. Siefken in Justus Liebigs Annalen der Chemie, 562, S. 75-136), beispielsweise solche der Formel Q(NCO)ₙ, in der n = 2 bis 4, vorzugsweise 2 bis 3, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten, z.B. solche Polyisocyanate, wie sie in der DE-OS 28 32 253, Seiten 10 bis 11, beschrieben werden. Besonders bevorzugt werden in der Regel die technisch leicht zugänglichen Polyisocyanate, die sich vom 2,4- und/oder 2,6-Toluylendiisocyanat bzw. von 4,4'- und/oder 2,4'-Diphenylmethandiisocyanat ableiten.

Ausgangskomponenten sind ferner Verbindungen mit mindestens zwei gegenüber Isocyanaten reaktionsfähigen Wasserstoffatomen mit einem Molekulargewicht von 400 bis 10.000 ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen, speziell solche vom Molekulargewicht 1000 bis 6000, vorzugsweise 2000 bis 6000, in der Regel 2 bis 8, vorzugsweise aber 2 bis 6 Hydroxylgruppen aufweisende Polyether und Polyester sowie Polycarbonate und Polyesteramide, wie sie für die Herstellung von homogenen und von zellförmigen Polyurethanen an sich bekannt sind und wie sie etwa in der

DE-OS 28 32 253 beschrieben werden. Die mindestens zwei Hydroxylgruppen aufweisenden Polyether und Polyester sind erfindungsgemäß bevorzugt.

Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hierfür werden ebenfalls in der DE-OS 28 32 253 beschrieben.

Gegebenenfalls werden Hilfs- und Zusatzmittel mitverwendet wie Katalysatoren der an sich bekannten Art, oberflächenaktive Zusatzstoffe, wie Emulgatoren und Schaumstabilisatoren, Reaktionsverzögerer, z.B. sauer reagierende Stoffe wie Salzsäure oder organische Säurehalogenide, ferner Zellregler der an sich bekannten Art wie Paraffine oder Fettalkohole und Dimethylpolysiloxane sowie Pigmente oder Farbstoffe und weitere Flammschutzmittel, ferner Stabilisatoren gegen Alterungsund Witterungseinflüsse, Kernverfärbungsinhibitoren, Weichmacher und fungistatisch und bakteriostatisch wirkende Substanzen sowie Füllstoffe, wie Bariumsulfat, Kieselgur, Ruß- oder Schlämmkreide (DE-OS 27 32 292).

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabiliatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, Carl Hanser Verlag, München, 1993, auf den Seiten 104 bis 123 beschrieben.

Polyisocyanuratschaumstoffe werden nach den hierfür bekannten Verfahren und Bedingungen hergestellt.

Die Erfindung wird durch die nachstehenden Beispiele erläutert.

Für die Versuche wurden die folgenden Bestandteile eingesetzt:
OMPS: oxethylierte Methylphosphonsäure mit einem Phosphor-Gehalt von 12,7 Gew.-%, einer Hydroxylzahl von 430 mg KOH/g und einer Viskosität von 275 mPa s bei 25°C.
OEPS: oxethylierte Ethylphosphonsäure mit einem Phosphor-Gehalt von 12,2 Gew.-%, einer Hydroxylzahl von 447 mg KOH/g und einer Viskosität von 190 mPa s bei 25 °C.
OPPS: oxethylierte Propylphosphonsäure mit einem Phosphor-Gehalt von 12,3 Gew.-%, einer Hydroxylzahl von 421 mg KOH/g und einer Viskosität von 160 mPa s bei 25 °C.
®Exolit OP550: ein hydroxyalkylestergruppentragender Phosphorsäurepolyester mit einem Phosphor-Gehalt von 17 Gew.-%, einer Hydroxylzahl von 130 mg KOH/g und einer Viskosität von 2.000 mPa s bei 25°C.
   (Hersteller jeweils: Clariant GmbH)

| | |
|---|---|
| Polyetherpolyol | ®Lupranol 3323, Fa. BASF, ein Polyether-Polyol mit einer Hydroxylzahl von 340 mg KOH/g |
| Katalysatoren | N,N-Dimethylcyclohexylamin, Fa. Merck-Schuchardt |
| Stabilisator | ®Tegostab B8466, Th. Goldschmidt AG, ein Polyethermodifiziertes Polysiloxan |
| Isocyanat | Caradate 30, Fa. ICI-Huntsman |

### Beispiele 1 bis 3

Es wurde ein wassergetriebener Polyurethanhartschaum (Index 130) mit einem Raumgewicht von ca. 40 kg/m³ nach folgender Rezeptur hergestellt (Angaben in Gewichtsteilen):

| Komponente | Beispiel 1 | Beispiel 2 | Beispiel 3 (Vergleich) |
|---|---|---|---|
| Polyol | 100,0 | 100,0 | 100,0 |
| Lupranol 3323 | | | |
| Flammschutzmittel | 25 | 30 | 100 |
| | OMPS | OEPS | Exolit OP550 |
| Katalysator | 2,5 | 2,5 | 2,5 |
| DMCHA | | | |
| Stabilisator | 3,0 | 3,0 | 3,0 |
| Tegostab B 8466 | | | |
| Treibmittel | 4 | 4 | 9 |
| Wasser | | | |
| Isocyanat | Index 130 | Index 130 | Index 130 |
| Caradate 30 | | | |

Die Herstellung des Polyurethanhartschaumes erfolgte durch Mischung in der vorgegebenen Reihenfolge und anschließender Verschäumung.

### Prüfung des Brandverhaltens

Gemäß den Anforderungen der DIN 4102 erfolgt die Klassifizierung des Brandverhaltens nach dem Kleinbrenner-Test. Werden die Anforderungen im Kleinbrenner-Test erfüllt, so erfolgt die Einstufung in die Klasse B2. Erreichen die Flammenspitzen innerhalb von 15 Sekunden die Markierung, die 150 mm oberhalb des Flammangriffpunktes an der vertikal angeordneten plattenförmigen Probe angebracht ist, so gilt die geprüfte Probe als leichtentflammbar, d.h. sie wird der Baustoffklasse B3 zugeordnet.

Bei den vorgenannten, erfindungsgemäßen Polyurethanhartschäumen der Beispiele 1 und 2 wurde jweils der B2-Test nach DIN 4102 bestanden. Eine zusätzliche Messung der Rauchgasdichte sowohl unter schwelenden als auch unter flammenden Bedingungen ergab, daß diese um einen Faktor 3 bis 10 gegenüber solchen Polyurethanhartschäumen verringert werden konnte, die mit halogenhaltigen Flammschutzmitteln anstatt den oxalkylierten Alkylphosphonsäuren ausgerüstet wurden.

Mit dem Produkt des Beispiels 3 (Vergleich) wurde der B2-Test nicht bestanden.

## Patentansprüche

1. Halogenfreier, wassergetriebener flammwidriger Polyurethanhartschaum, **dadurch gekennzeichnet, daß** er als Flammschutzmittel oxalkylierte Alkylphosphonsäuren enthält.

2. Halogenfreier, wassergetriebener flammwidriger Polyurethanhartschaum nach Anspruch 1, **dadurch gekennzeichnet, daß** die oxalkylierten Alkylphosphonsäuren der allgemeinen Formel I entsprechen, 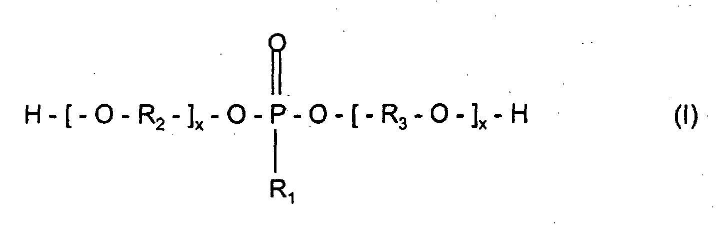 in der
R₁ einen Methyl-, Ethyl- oder Propylrest
R₂, R₃ gleich oder verschieden sind und für einen Methylen-, Ethylen- oder Propylenrest stehen und x eine Zahl von 1,2 bis 1,9 bedeutet.

3. Halogenfreier, wassergetriebener flammwidriger Polyurethanhartschaum nach Anspruch 1 oder 2, **dadurch gekennzeichnet, daß** R₁ einen Methylrest und x eine Zahl von 1,5 bis 1,7 bedeutet.

4. Halogenfreier, wassergetriebener flammwidriger Polyurethanhartschaum nach einem oder mehreren der Ansprüche 1 bis 3, **dadurch gekennzeichnet, daß** er das Flammschutzmittel in einer Menge von 0,1 bis 30 Gew.-%, bezogen auf den ausgehärteten Polyurethanhartschaum, enthält.

5. Halogenfreier, wassergetriebener flammwidriger Polyurethanhartschaum nach einem oder mehreren der Ansprüche 1 bis 4, **dadurch gekennzeichnet, daß** er das Flammschutzmittel in einer Menge von 5 bis 20 Gew.-%, bezogen auf den ausgehärteten Polyurethanhartschaum, enthält.

6. Halogenfreier, flammwidriger Polyurethanhartschaum nach einem oder mehreren der Ansprüche 1 bis 5, **dadurch gekennzeichnet, daß** er ein Raumgewicht von 25 bis 80 kg/m³ aufweist.

7. Halogenfreier, flammwidriger Polyurethanhartschaum nach einem oder mehreren der Ansprüche 1 bis6, **dadurch gekennzeichnet, daß** er ein Raumgewicht von 30 bis 50 kg/m³ aufweist.

8. Verfahren zur Herstellung von halogenfreien, wassergetriebenen flammwidrigen Polyurethanhartschäumen, **dadurch gekennzeichnet, daß** als Flammschutzmittel oxalkylierte Alkylphosphonsäuren eingesetzt werden.

9. Verfahren nach Anspruch 8, **dadurch gekennzeichnet, daß** die oxalkylierten Alkylphosphonsäuren der allgemeinen Formel I entsprechen, 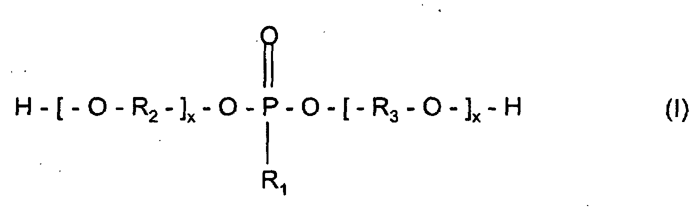 in der
R₁ einen Methyl-, Ethyl- oder Propylrest
R₂, R₃ gleich oder verschieden sind und für einen Methylen-, Ethylen- oder Propylenrest stehen und x eine Zahl von 1,2 bis 1,9 bedeutet.

10. Verfahren nach Anspruch 8 oder 9 **dadurch gekennzeichnet, daß** man organische Polyisocyanate mit Verbindungen mit mindestens 2 gegenüber Isocyanaten reaktionsfähigen Wasserstoffatomen mit Wasser als Treibmittel, Stabilisatoren, Aktivatoren und/oder weiteren üblichen Hilfs- und Zusatzstoffen in Gegenwart von oxalkylierten Alkylphosphonsäuren der allgemeinen Formel I umsetzt.

11. Verfahren nach einem oder mehreren der Ansprüche 8 bis 10, **dadurch gekennzeichnet, daß** es sich bei den oxalkylierten Alkylphosphonsäuren der allgemeinen Formel I um bei Verarbeitungstemperatur flüssige Verbindungen handelt.

12. Verfahren nach einem oder mehreren der Ansprüche 8 bis 11, **dadurch gekennzeichnet, daß** es sich bei den oxalkylierten Alkylphosphonsäuren der allgemeinen Formel I um gegenüber Isocyanaten reaktive Verbindungen handelt.

13. Verfahren nach einem oder mehreren der Ansprüche 8 bis 12, **dadurch gekennzeichnet, daß** die oxalkylierten Alkylphosphonsäuren der allgemeinen Formel I in einer Menge von 0,01 bis 50 Teilen, bezogen auf 100 Teile Polyolkomponente, eingesetzt werden.

14. Verfahren nach einem oder mehreren der Ansprüche 8 bis 13, **dadurch gekennzeichnet, daß** die oxalkylierten Alkylphosphonsäuren der allgemeinen Formel I in einer Menge von 10 bis 35 Teilen, bezogen auf 100 Teile Polyolkomponente, eingesetzt werden.

15. Verwendung von oxalkylierten Alkylphosphonsäuren der allgemeinen Formel I als halogenfreie Flammschutzmittel zur Herstellung von flammwidrigen Polyurethanhartschäumen.

## Claims

1. A halogen-free, water-blown, flame-retardant rigid polyurethane foam, which comprises oxalkylated alkylphosphonic acids as flame retardant.

2. The halogen-free, water-blown, flame-retardant rigid polyurethane foam as claimed in claim 1, wherein the oxalkylated alkylphosphonic acids have the formula I 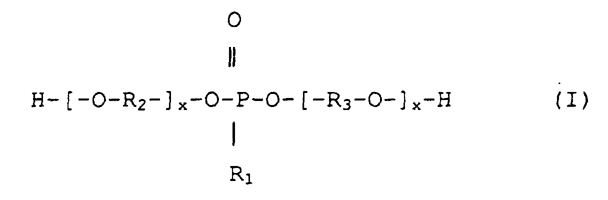 where
R₁ is a methyl, ethyl or propyl radical,
R₂ and R₃ are identical or different and are a methylene, ethylene or propylene radical and x is a number from 1.2 to 1.9.

3. The halogen-free, water-blown, flame-retardant rigid polyurethane foam as claimed in claim 1 or 2, wherein R₁ is a methyl radical and x is a number from 1.5 to 1.7.

4. The halogen-free, water-blown, flame-retardant rigid polyurethane foam as claimed in one or more of claims 1 to 3, which comprises, based on the fully cured rigid polyurethane foam, from 0.1 to 30% by weight of the flame retardant.

5. The halogen-free, water-blown, flame-retardant rigid polyurethane foam as claimed in one or more of claims 1 to 4, which comprises, based on the fully cured rigid polyurethane foam, from 5 to 20% by weight of the flame retardant.

6. The halogen-free, flame-retardant rigid polyurethane foam as claimed in one or more of claims 1 to 5, which has a density of from 25 to 80 kg/m³.

7. The halogen-free, flame-retardant rigid polyurethane foam as claimed in one or more of claims 1 to 6, which has a density of from 30 to 50 kg/m³.

8. A process for producing halogen-free, water-blown, flame-retardant rigid polyurethane foams, which comprises using oxalkylated alkylphosphonic acids as flame retardant.

9. The process as claimed in claim 8, wherein the oxalkylated alkylphosphonic acids have the formula I 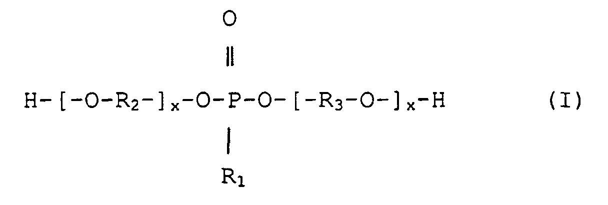 where
R₁ is a methyl, ethyl or propyl radical,
R₂ and R₃ are identical or different and are a methylene, ethylene or propylene radical and x is a number from 1.2 to 1.9.

10. The process as claimed in claim 8 or 9, wherein organic polyisocyanates are reacted with compounds having at least two hydrogen atoms capable of reaction with isocyanates, with water as blowing agent, with stabilizers, with activators and/or with other conventional auxiliaries and additives, in the presence of oxalkylated alkylphosphonic acids of the formula I.

11. The process as claimed in one or more of claims 8 to 10, wherein the oxalkylated alkylphosphonic acids of the formula I are compounds liquid at processing temperature.

12. The process as claimed in one or more of claims 8 to 11, wherein the oxalkylated alkylphosphonic acids of the formula I are compounds reactive toward isocyanates.

13. The process as claimed in one or more of claims 8 to 12, wherein, based on 100 parts of polyol component, the amount used of the oxalkylated alkylphosphonic acids of the formula I is from 0.01 to 50 parts.

14. The process as claimed in one or more of claims 8 to 13, wherein, based on 100 parts of polyol component, the amount used of the oxalkylated alkylphosphonic acids of the formula I is from 10 to 35 parts.

15. The use of oxalkylated alkylphosphonic acids of the formula I as halogen-free flame retardants for producing flame-retardant rigid polyurethane foams.

## Revendications

1. Mousse rigide de polyuréthanne non halogénée, expansée à l'eau et retardatrice de flamme, **caractérisée en ce qu'**elle contient en tant qu'agent d'ignifugation des acides alkylphosphoniques alcoxylés.

2. Mousse rigide de polyuréthanne non halogénée, expansée à l'eau et retardatrice de flamme selon la revendication 1, **caractérisée en ce que** les acides alkylphosphoniques alcoxylés ont la formule générale I 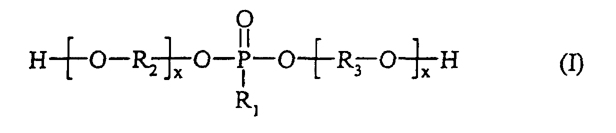 dans laquelle
R₁ est un radical méthyle, éthyle ou propyle,
R₂ et R₃ sont identiques ou différents et représentent chacun un radical méthylène, éthylène ou propylène, et x est un nombre de 1,2 à 1,9.

3. Mousse rigide de polyuréthanne non halogénée, expansée à l'eau et retardatrice de flamme selon la revendication 1 ou 2, **caractérisée en ce que** R₁ est un radical méthyle et x est un nombre de 1,5 à 1,7.

4. Mousse rigide de polyuréthanne non halogénée, expansée à l'eau et retardatrice de flamme selon l'une ou plusieurs des revendications 1 à 3, **caractérisée en ce qu'**elle contient l'agent d'ignifugation en une quantité de 0,1 à 30 % en poids par rapport à la mousse rigide de polyuréthanne durcie.

5. Mousse rigide de polyuréthanne non halogénée, expansée à l'eau et retardatrice de flamme selon l'une ou plusieurs des revendications 1 à 4, **caractérisée en ce qu'**elle contient l'agent d'ignifugation en une quantité de 5 à 20 % en poids par rapport à la mousse rigide de polymérisation durcie.

6. Mousse rigide de polyuréthanne non halogénée, expansée à l'eau et retardatrice de flamme selon l'une ou plusieurs des revendications 1 à 5, **caractérisée en ce qu'**elle a une masse volumique de 25 à 80 kg/m³.

7. Mousse rigide de polyuréthanne non halogénée, expansée à l'eau et retardatrice de flamme selon l'une ou plusieurs des revendications 1 à 6, **caractérisée en ce qu'**elle a une masse volumique de 30 à 50 kg/m³.

8. Procédé de préparation de mousses non halogénées, expansées à l'eau et retardatrices de flamme, **caractérisé en ce qu'**on y utilise en tant qu'agent d'ignifugation des acides alkylphosphoniques alcoxylés.

9. Procédé selon la revendication 8, **caractérisé en ce que** les acides alkylphosphoniques alcoxylés ont la formule générale I 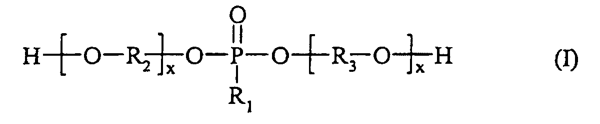 dans laquelle
R₁ est un radical méthyle, éthyle ou propyle,
R₂ et R₃ sont identiques ou différents et représentent chacun un radical méthylène, éthylène ou propylène, et x est un nombre de 1,2 à 1,9.

10. Procédé selon la revendication 8, ou 9 **caractérisé en ce qu'**on fait réagir des polyisocyanates avec des composés ayant au moins 2 atomes d'hydrogène réactifs vis-à-vis des isocyanates, avec de l'eau en tant qu'agent porogène, des stabilisants, des activateurs et/ou d'autres additifs et adjuvants usuels, en présence d'acides alkylphosphoniques alcoxylés de formule générale I.

11. Procédé selon l'une ou plusieurs des revendications 8 à 10, **caractérisé en ce que**, pour ce qui concerne les acides alkylphosphoniques alcoxylés de formule générale I, il s'agit de composés qui sont liquides à la température de mise en oeuvre.

12. Procédé selon l'une ou plusieurs des revendications 8 à 11, **caractérisé en ce que**, pour ce qui concerne les acides alkylphosphoniques alcoxylés de formule générale I, il s'agit de composés réactifs vis-à-vis des isocyanates.

13. Procédé selon l'une ou plusieurs des revendications 8 à 12, **caractérisé en ce que** les acides alkylphosphoniques alcoxylés de formule générale I sont utilisés en une quantité de 0,01 à 50 parties pour 100 parties du composant polyol.

14. Procédé selon l'une ou plusieurs des revendications 8 à 13, **caractérisé en ce que** les acides alkylphosphoniques alcoxylés de formule générale I sont utilisés en une quantité de 10 à 35 parties pour 100 parties du composant polyol.

15. Utilisation d'acides alkylphosphoniques alcoxylés de formule générale I en tant qu'agents d'ignifugation non halogénés pour préparer des mousses rigides de polyuréthanne retardatrices de flamme.
